# EUROPÄISCHE PATENTSCHRIFT

(11) **EP 4 446 612 B1**
(45) Veröffentlichungstag und Bekanntmachung des Hinweises auf die Patenterteilung: **03.06.2026**
(21) Anmeldenummer: 24169367.0
(22) Anmeldetag: 10.04.2024
(51) Int. Cl.: F16G 3/00, F16G 3/10

(54) **ANLAGE UND VERFAHREN ZUM VERSCHWEISSEN VON ZWEI ENDEN EINES TRANSPORTBANDES MITEINANDER**
APPARATUS AND METHOD FOR WELDING TWO ENDS OF A CONVEYOR BELT TO ONE ANOTHER
INSTALLATION ET PROCÉDÉ POUR SOUDER ENTRE ELLES DEUX EXTRÉMITÉS D'UNE BANDE TRANSPORTEUSE

(30) Priorität: 11.04.2023 DE 102023109086
(43) Veröffentlichungstag der Anmeldung: 16.10.2024
(73) Patentinhaber: Wallroth F & E UG, 56337 Arzbach (DE)
(72) Erfinder: Knopp, Hans Werner, 56412 Großholbach (DE)
(74) Vertreter: Bernsmann, Falk

(56) Entgegenhaltungen:
- US-A- 4 765 862
- US-B2- 8 770 253

## Beschreibung

### Technisches Gebiet

Die Erfindung betrifft eine Anlage zum Verschweißen von zwei Enden eines Transportbandes miteinander, umfassend zwei Klemmvorrichtungen mit jeweils zwei Klemmblöcken zum Einklemmen der Enden des Transportbandes dazwischen, wobei von den beiden Klemmblöcken der Klemmvorrichtungen jeweils ein oberer Klemmblock zum Anlegen an eine Oberseite des Transportbandes und ein unterer Klemmblock zum Anlegen an eine Unterseite des Transportbandes eingerichtet ist. Die Anlage umfasst eine Führungsvorrichtung, die die Klemmvorrichtungen parallel zur Oberseite des Transportbandes aufeinander zu verschieblich führt.

Die Erfindung betrifft ferner ein Verfahren zum Verschweißen von zwei Enden eines Transportbandes miteinander mit der Anlage.

### Stand der Technik

Aus dem Stand der Technik, beispielsweise aus der Patentanmeldung EP 2 679 522 A1, sind Transportbänder zum Transport von Gütern bekannt, die in einem Transportsystem als Endlosbänder um Walzen herum geführt werden. Zur Herstellung eines Endlosbandes wird in der Regel zunächst ein flaches Transportband erzeugt, dessen Enden dann miteinander verbunden werden, um das Endlosband zu bilden.

Übliche Transportbänder bestehen aus Kunststoffen, sodass die Enden durch Verschweißen miteinander verbunden werden können. Dabei entsteht jedoch eine über eine Oberseite und/oder eine Unterseite des Transportbandes überstehende Schweißnaht. Die Schweißnaht kann zu Vibrationen, Geräuschen, Reibungsverlusten und Verschleiß führen, wenn das Transportband um eine Walze herum geführt wird. Außerdem kann die Schweißnaht die Beladung des Transportbandes mit Gütern und die hygienische Reinigung des Transportbandes behindern. Die Druckschriften US 8 770 253 B2 und US 4 765 862 A offenbaren bekannte Vorrichtungen und Verfahren zum Verschweißen von zwei Enden eines Kunststoffbandes.

Eine Entfernung der Schweißnaht mit bekannten Verfahren ist aufwändig und unzuverlässig, da häufig Reste der Schweißnaht an dem Transportband verbleiben.

### Technische Aufgabe

Die Aufgabe der Erfindung ist es, eine Anlage und ein Verfahren zum Verschweißen der Enden eines Transportbandes miteinander zu schaffen, die eine reibungsarme, vibrationsarme, geräuscharme, verschleißarme und hygienische Verwendung des Transportbandes zum Transport von Gütern in einem Transportsystem ermöglichen.

### Technische Lösung

Die vorliegende Erfindung stellt eine Anlage gemäß Anspruch 1 bereit, die die technische Aufgabe löst. Ebenso wird die Aufgabe durch ein Verfahren gemäß Anspruch 8 gelöst. Vorteilhafte Ausgestaltungen sind Gegenstand der abhängigen Ansprüche.

Die erfindungsgemäße Anlage ist zum Verschweißen von zwei Enden eines Transportbandes miteinander ausgelegt. Das Transportband ist vorzugsweise elastisch und/oder monolithisch. Das Transportband besteht beispielsweise aus einem Kunststoff, insbesondere aus einem Elastomer, vorzugsweise aus einem Polyurethan.

Das Transportband weist vorzugsweise eine Transportrichtung zum Transport von Gütern mit dem Transportband in der Transportrichtung auf, wobei die beiden Enden einander vorzugsweise entlang der Transportrichtung gegenüberliegen.

Die Anlage umfasst zwei Klemmvorrichtungen mit jeweils zwei Klemmblöcken zum Einklemmen jeweils eines der Enden des Transportbandes zwischen den beiden Klemmblöcken. Die Klemmblöcke bestehen beispielsweise aus einem Metall, insbesondere aus Stahl oder Aluminium.

Von den beiden Klemmblöcken der Klemmvorrichtungen ist jeweils ein oberer Klemmblock zum Anlegen an eine flächige Oberseite des Transportbandes und ein unterer Klemmblock zum Anlegen an eine zu der Oberseite parallele, flächige Unterseite des Transportbandes eingerichtet.

Die Anlage umfasst eine Führungsvorrichtung, die die Klemmvorrichtungen parallel zur Oberseite des Transportbandes, insbesondere entlang der Transportrichtung des Transportbandes, aufeinander zu verschieblich führt. Mit Hilfe der Führungsvorrichtung können die in den Klemmvorrichtungen eingeklemmten Enden des Transportbandes aufeinander zu geführt und zusammengepresst werden, um die Enden miteinander zu verschweißen.

An jedem der Klemmblöcke jeder der Klemmvorrichtungen ist jeweils mindestens eine Klinge mit einer Seitenfläche zum Anlegen an die Oberseite oder an die Unterseite des Transportbandes angeordnet, wobei jede der Klingen eine zu der Oberseite parallele Schneidkante aufweist, die auf die jeweils andere Klemmvorrichtung zu über den jeweiligen Klemmblock übersteht.

### Vorteilhafte Wirkungen

Wenn die Klemmvorrichtungen zum Verschweißen der Enden des Transportbandes zusammengeführt werden, entsteht eine über die Oberseite und/oder die Unterseite des Transportbandes überstehende Schweißnaht. Dabei erzeugt die Klinge mit der über den Klemmblock überstehenden Schneidkante in der Schweißnaht eine Materialverjüngung in einer Ebene mit der Oberseite und/oder der Unterseite. An der Materialverjüngung kann die Schweißnaht einfach und zuverlässig durchtrennt werden, sodass keine über die Oberseite und/oder Unterseite überstehenden Reste an dem Transportband verbleiben. Das Transportband erhält so eine glatte Oberseite und Unterseite, sodass eine reibungsarme, vibrationsarme, geräuscharme, verschleißarme und hygienische Verwendung des Transportbandes zum Transport von Gütern in einem Transportsystem möglich ist, wodurch außerdem die Lebensdauer des Transportbands erhöht wird.

Zur Wägung von auf dem Transportband transportierten Gütern hat die restlose Entfernung der Überstände der Schweißnaht den Vorteil, dass genauere Messergebnisse erzielt werden können, da bei einer Bewegung des Transportbands weniger Vibrationen entstehen und ein sogenanntes "Schlagen" des Transportbands verhindert wird.

### Beschreibung der Ausführungsarten

Erfindungsgemäß ist an jedem der Klemmblöcke jeder der Klemmvorrichtungen jeweils mindestens eine Klinge mit einer Seitenfläche zum Anlegen an die Oberseite oder an die Unterseite des Transportbandes angeordnet, wobei jede der Klingen eine zu der Oberseite parallele Schneidkante aufweist, die auf die jeweils andere Klemmvorrichtung zu über den Klemmblock übersteht.

Dadurch, dass an allen Klemmblöcken Klingen angeordnet sind, kann an der Oberseite und and der Unterseite des Transportbandes eine besonders schmale Materialverjüngung in der Schweißnaht erzeugt werden, sodass die Schweißnaht besonders einfach und sauber durchtrennt werden kann.

Die Anlage umfasst vorzugsweise eine zwischen die beiden Klemmvorrichtungen einbringbare Ausrichthilfe zur Ausrichtung der beiden Enden zueinander, bevorzugt zur Ausrichtung von in der Oberseite und/oder in der Unterseite des Transportbandes angeordneten Nuten zueinander. Mit Hilfe der Ausrichthilfe können die Enden auf einfache Weise exakt zueinander ausgerichtet werden, sodass die Enden versatzfrei miteinander verschweißt werden können. Eine versatzfreie Verschweißung vermindert Reibung, Vibrationen und Verschleiß bei der Verwendung des Transportbandes in dem Transportsystem. Eine versatzfreie Verschweißung ist insbesondere bei Transportbändern mit Nuten wichtig, damit Führungselemente oder Antriebselemente des Transportsystems, die in die Nuten zur Führung oder zum Antrieb des Transportbandes eingreifen sollen, nicht durch einen Versatz aus den Nuten herausgetrieben werden.

Die Ausrichthilfe umfasst beispielsweise eine Anlegeschablone zum passgenauen Anlegen der Enden des Transportbandes an die Anlegeschablone.

Die Anlage umfasst vorzugsweise eine zwischen die beiden Klemmvorrichtungen einbringbare Heizvorrichtung zum Anschmelzen zumindest eines der beiden Enden, vorzugsweise beider Enden. Wenn zumindest eines der beiden Enden angeschmolzen wird, können die Enden anschließend ohne weitere Hilfsmittel durch Zusammenpressen der Enden miteinander verschweißt werden.

Die Heizvorrichtung umfasst beispielsweise einen, insbesondere elektrischen, Heizstab.

Das Transportband ist vorzugsweise dazu ausgelegt, Güter entlang einer zu der Oberseite des Transportbandes parallelen Transportrichtung zu transportieren, wobei die beiden Klemmvorrichtungen vorzugsweise dazu ausgelegt sind, die Enden so einzuklemmen, dass die Transportrichtung des Transportbandes schräg zu der Schneidkante der mindestens einen Klinge der Klemmblöcke ausgerichtet ist. Alternativ kann die Transportrichtung orthogonal zu der Schneidkante ausgerichtet sein. Die Transportrichtung schließt mit der Schneidkante vorzugsweise einen Winkel von 70° bis 90°, insbesondere von 80° bis 89°, beispielsweise von 85°, ein.

Durch die schräge Schneidkante entsteht eine zu der Transportrichtung schräge Schweißnaht beim Verschweißen der Enden des Transportbandes. Eine schräge Schweißnaht ist bei einer vorgegebenen Breite des Transportbandes orthogonal zur Transportrichtung länger als eine zur Transportrichtung orthogonale Schweißnaht. Die längere Schweißnaht bewirkt daher eine mechanisch besonders stabile Verbindung der beiden Enden. Ferner liegt bei einer Umlenkung des Transportbandes in dem Transportsystem um eine kleine Umlenkwalze nicht die gesamte schräge Schweißnaht gleichzeitig an der Umlenkrolle an und wird durch die Umlenkung deformiert. Daher wird die schräge Schweißnaht mechanisch weniger belastet, und das Transportband läuft ruhiger um die Umlenkrolle als bei einer zur Transportrichtung orthogonalen Schweißnaht.

Zumindest einer, vorzugsweise jeder, der Klemmblöcke umfasst vorzugsweise eine Mehrzahl von Aufnahmeöffnungen zur Aufnahme jeweils eines Endes eines Transportbandes zum Verschweißen des Endes. In die Aufnahmeöffnungen können mehrere Transportbänder gleichzeitig eingelegt werden, um deren Enden besonders schnell und einfach miteinander zu verschweißen.

Die Führungsvorrichtung umfasst vorzugsweise ein Schienensystem, auf dem die Klemmvorrichtungen, beispielsweise auf Schlitten, Rollen oder Rädern, verschieblich geführt sind.

Die Anlage umfasst vorzugsweise eine, insbesondere motorisierte, Antriebsvorrichtung zum Antrieb einer Verschiebung der Klemmvorrichtungen entlang der Führungsvorrichtung. Die Antriebsvorrichtung umfasst beispielsweise einen Spindelantrieb.

Das erfindungsgemäße Verfahren dient zum Verschweißen von zwei Enden eines Transportbandes miteinander mit einer erfindungsgemäßen Anlage. Das Verfahren umfasst ein Auflegen einer flächigen Unterseite des Transportbandes auf die unteren Klemmblöcke der Klemmvorrichtungen der Anlage, sodass die Enden des Transportbandes einander gegenüberliegen.

Das Verfahren umfasst, vorzugsweise nach dem Auflegen der flächigen Unterseite auf die unteren Klemmblöcke, ein Anlegen der oberen Klemmblöcke der Klemmvorrichtungen an eine zu der Unterseite parallele, flächige Oberseite des Transportbandes.

Das Verfahren umfasst, vorzugsweise nach dem Anlegen der oberen Klemmblöcke an die Oberseite, ein Einklemmen der Enden des Transportbandes zwischen den Klemmblöcken. Das Einklemmen stellt sicher, dass die Enden in der richtigen Position zueinander verschweißt werden.

Das Verfahren umfasst, vorzugsweise nach dem Einklemmen der Enden, ein Anschmelzen zumindest eines der Enden, vorzugsweise beider Enden, des Transportbandes. Im angeschmolzenen Zustand können die Enden miteinander verschweißt werden.

Das Verfahren umfasst, vorzugsweise nach dem Anschmelzen zumindest eines der Enden, ein Zusammenschieben der beiden Klemmvorrichtungen entlang der Führungsvorrichtung der Anlage, sodass die Enden des Transportbandes zusammengepresst werden, wobei eine über die Oberseite und/oder über die Unterseite des Transportbandes überstehende Schweißnaht entsteht.

Das Verfahren umfasst ein Erzeugen einer Materialverjüngung mit den Schneidkanten der Klingen der Klemmblöcke in der Schweißnaht in einer Ebene mit der Oberseite und/oder der Unterseite bei dem Zusammenschieben.

Das Verfahren umfasst vorzugsweise ein Lösen der oberen Klemmblöcke von der Oberseite des Transportbandes und ein Entnehmen des Transportbandes von den unteren Klemmblöcken nach dem Erzeugen der Materialverjüngung.

Das Verfahren umfasst vorzugsweise ein Durchtrennen, bevorzugt ein Durchreißen und/oder ein Durchschneiden, der Materialverjüngung nach dem Erzeugen der Materialverjüngung und vorzugsweise nach dem Lösen der oberen Klemmblöcke von der Oberseite des Transportbandes und dem Entnehmen des Transportbandes von den unteren Klemmblöcken. Durch das Durchtrennen der Materialverjüngung wird der über die Oberseite und/oder über die Unterseite überstehende Teil der Schweißnaht schnell, einfach und zuverlässig vollständig entfernt. Das Durchschneiden erfolgt beispielsweise mit einem Messer oder mit einem Cutter.

Das Verfahren umfasst vor dem Einklemmen der Enden des Transportbandes zwischen den Klemmblöcken vorzugsweis ein Einbringen einer Ausrichthilfe zwischen die beiden Klemmvorrichtungen und ein Ausrichten der beiden Enden des Transportbandes mit der Ausrichthilfe zueinander, wobei bevorzugt in der Oberseite und/oder in der Unterseite des Transportbandes angeordnete Nuten zueinander ausgerichtet werden.

Das Verfahren umfasst vorzugsweise ein Entfernen der Ausrichthilfe nach dem Einklemmen der Enden und vor dem Zusammenschieben der beiden Klemmvorrichtungen.

Das Verfahren umfasst nach dem Einklemmen der Enden des Transportbandes zwischen den Klemmblöcken vorzugsweise ein Einbringen einer Heizvorrichtung zwischen die beiden Klemmvorrichtungen, wobei das Anschmelzen zumindest eines der Enden des Transportbandes mit der Heizvorrichtung erfolgt.

Das Verfahren umfasst vorzugsweise ein Entfernen der Heizvorrichtung nach dem Anschmelzen zumindest eines der Enden und vor dem Zusammenschieben der beiden Klemmvorrichtungen.

Das Verfahren umfasst nach dem Erzeugen der Materialverjüngung und bevorzugt nach einem Durchtrennen der Materialverjüngung vorzugsweise ein Entfernen der Schweißnaht aus in der Oberseite und/oder in der Unterseite des Transportbandes angeordneten Nuten. In den Nuten können nach dem Durchtrennen der Materialverjüngung Reste der Schweißnaht verbleiben, die eine Funktion der Nuten zur Führung oder zum Antrieb des Transportbandes beeinträchtigen könnten. Eine solche Beeinträchtigung wird durch das Entfernen vermieden. Das Entfernen umfasst beispielsweise ein Herausschneiden der Schweißnaht aus den Nuten, beispielsweise mit einem Seitenschneider, mit einem Frontschneider oder mit einer Kneifzange.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind.
Figur 1 zeigt eine schematische Darstellung einer erfindungsgemäßen Anlage.
Figur 2 zeigt eine schematische Darstellung eines erfindungsgemäßen Verfahrens.

### Fig.1

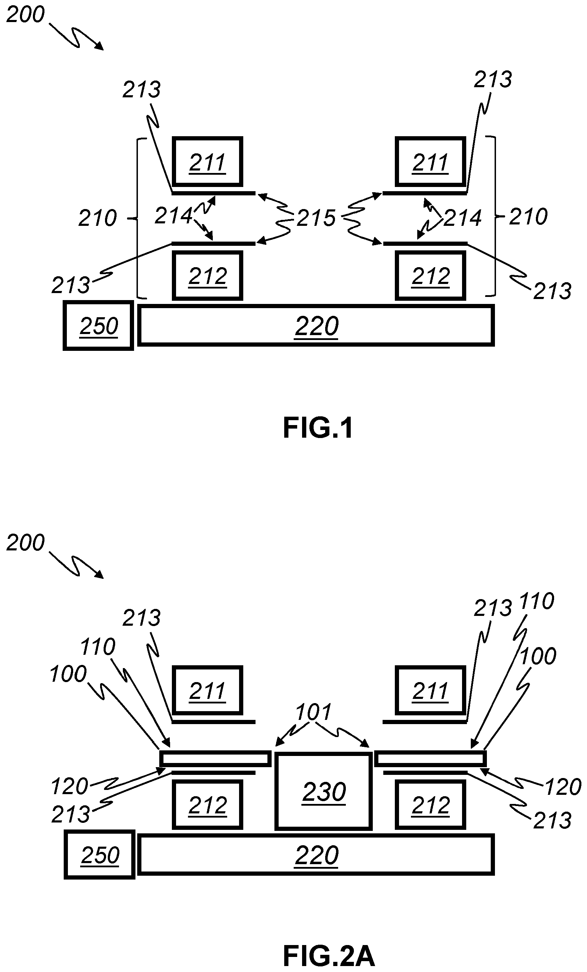

Figur 1 zeigt eine schematische Darstellung einer erfindungsgemäßen Anlage 200 zum Verschweißen von zwei Enden eines Transportbandes (in Figur 1 nicht gezeigt) miteinander.

Die Anlage umfasst zwei Klemmvorrichtungen 210 mit jeweils zwei Klemmblöcken 211, 212 zum Einklemmen jeweils eines der Enden des Transportbandes zwischen den beiden Klemmblöcken 211.

Von den beiden Klemmblöcken 211, 212 der Klemmvorrichtungen 210 ist jeweils ein oberer Klemmblock 211 zum Anlegen an eine flächige Oberseite des Transportbandes und ein unterer Klemmblock 212 zum Anlegen an eine zu der Oberseite parallele, flächige Unterseite des Transportbandes eingerichtet.

Die Anlage 200 umfasst eine Führungsvorrichtung 220, die die Klemmvorrichtungen 210, beispielsweise an einem Schienensystem, parallel zur Oberseite des Transportbandes aufeinander zu verschieblich führt.

An den Klemmblöcken 211, 212 der Klemmvorrichtungen 210 ist jeweils eine Klinge 213 mit einer Seitenfläche 214 zum Anlegen an die Oberseite oder an die Unterseite des Transportbandes angeordnet, wobei die Klinge 213 eine zu der Oberseite parallele Schneidkante 215 aufweist, die auf die jeweils andere Klemmvorrichtung 210 zu über den jeweiligen Klemmblock 211, 212 übersteht.

Die Anlage 200 umfasst vorzugsweise eine Antriebsvorrichtung 250 zum Antrieb einer Verschiebung der Klemmvorrichtungen 210 entlang der Führungsvorrichtung 220, beispielsweise mit einem Spindelantrieb.

### Fig.2

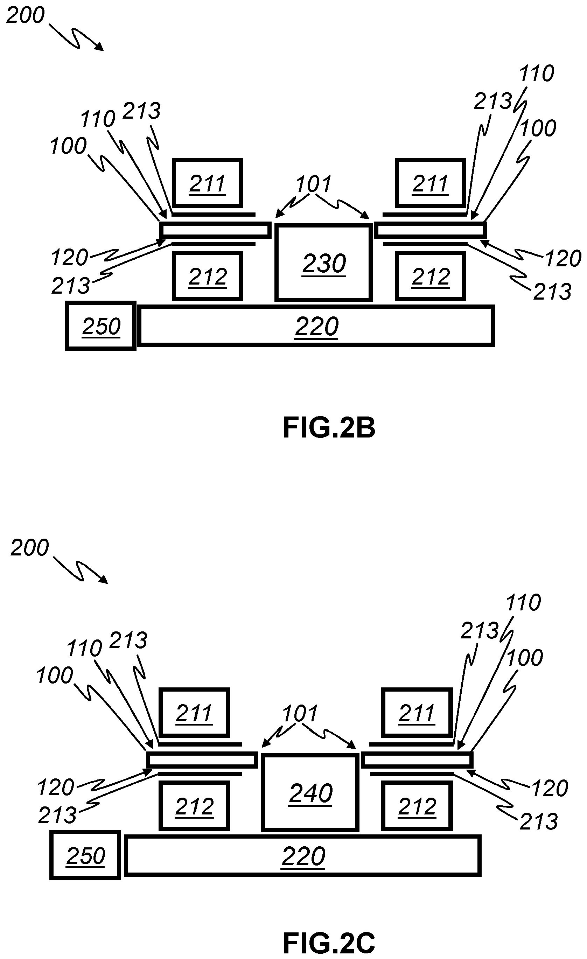

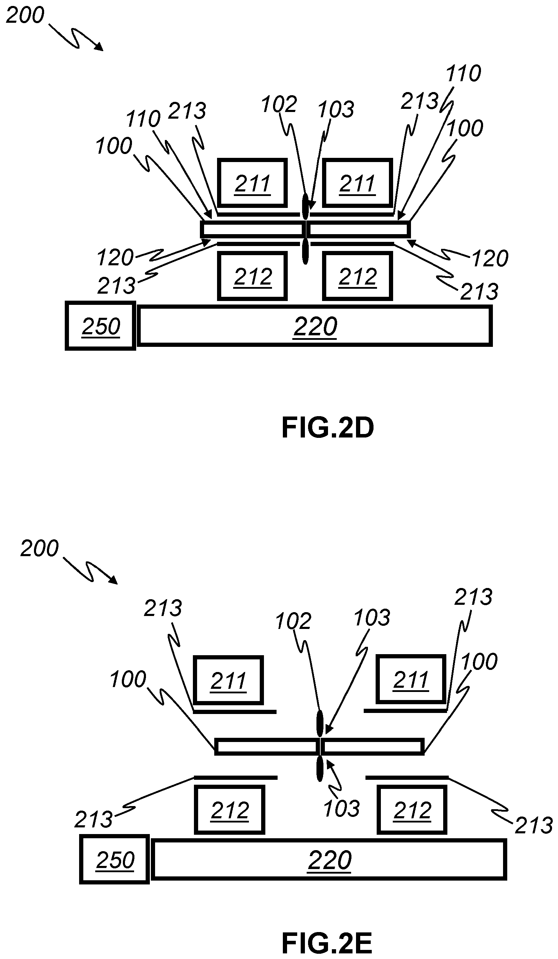

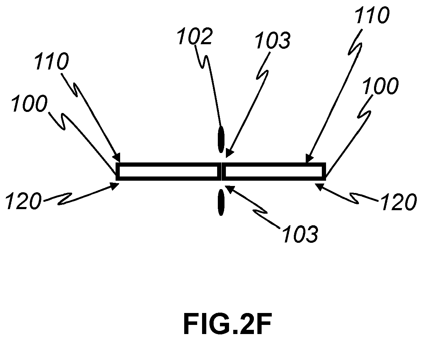

Figur 2 zeigt eine schematische Darstellung eines erfindungsgemäßen Verfahrens zum Verschweißen von zwei Enden 101 eines Transportbandes 100 miteinander mit einer erfindungsgemäßen Anlage 200. Die Anlage 200 kann wie in Figur 1 dargestellt ausgestaltet sein, wobei in Figur 2 der Übersichtlichkeit halber nicht alle Merkmale der Anlage 200 beschriftet und erläutert sind.

Das gezeigte Verfahren umfasst optional ein Einbringen einer Ausrichthilfe 230, beispielsweise einer Anlegeschablone, zwischen die beiden Klemmvorrichtungen 210 der Anlage 200 und ein Ausrichten der beiden Enden 101 des Transportbandes 100 mit der Ausrichthilfe 230 zueinander.

Das Verfahren umfasst ein in Figur 2A gezeigtes Auflegen einer flächigen Unterseite 120 des Transportbandes 100 auf die unteren Klemmblöcke 212 der Klemmvorrichtungen 210 der Anlage 200, sodass die Enden 101 des Transportbandes 100 einander gegenüberliegen.

Das Verfahren umfasst nach dem Auflegen der Unterseite 120 auf die unteren Klemmblöcke 212 ein in Figur 2B gezeigtes Anlegen der oberen Klemmblöcke 211 der Klemmvorrichtungen 210 an eine zu der Unterseite 120 parallele, flächige Oberseite 110 des Transportbandes 100.

Das Verfahren umfasst nach dem Anlegen der oberen Klemmblöcke 211 an die Oberseite 110 ein Einklemmen der Enden 101 des Transportbandes 100 zwischen den Klemmblöcken 211, 212. Nach dem Einklemmen kann die Ausrichthilfe 230 entfernt werden.

Das Verfahren umfasst optional nach dem Einklemmen der Enden 101 des Transportbandes 100 zwischen den Klemmblöcken 211, 212 ein Einbringen einer Heizvorrichtung 240, beispielsweise eines elektrischen Heizstabes, zwischen die beiden Klemmvorrichtungen 210.

Das Verfahren umfasst nach dem Einklemmen der Enden 101 des Transportbandes 100 ein in Figur 2C gezeigtes Anschmelzen der Enden 101 des Transportbandes 100, beispielsweise mit der Heizvorrichtung 240. Nach dem Anschmelzen kann die Heizvorrichtung 240 entfernt werden.

Das Verfahren umfasst nach dem Anschmelzen der Enden 101 ein in Figur 2D gezeigtes Zusammenschieben der beiden Klemmvorrichtungen 210 entlang der Führungsvorrichtung 220 der Anlage 200, sodass die Enden 101 des Transportbandes 100 zusammengepresst werden, wobei eine über die Oberseite 110 und/oder über die Unterseite 120 des Transportbandes 100 überstehende Schweißnaht 102 entsteht.

Das Verfahren umfasst ein Erzeugen einer Materialverjüngung 103 mit den Schneidkante 215 der Klingen 213 der Klemmblöcke 211, 212 in der Schweißnaht 102 in einer Ebene mit der Oberseite 110 und der Unterseite 120 des Transportbandes 100 bei dem Zusammenschieben.

Das Verfahren umfasst optional ein in Figur 2E gezeigtes Lösen der oberen Klemmblöcke 211 von der Oberseite 110 des Transportbandes 100 und ein Entnehmen des Transportbandes 100 von den unteren Klemmblöcken 212 nach dem Erzeugen der Materialverjüngung.

Das Verfahren umfasst nach dem Erzeugen der Materialverjüngung 103: optional ein in Figur 2E gezeigtes Durchtrennen, beispielsweise Durchreißen und/oder Durchschneiden, der Materialverjüngung 103, sodass der Überstand der Schweißnaht 102 über die Oberseite 110 und über die Unterseite 120 des Transportbandes 100 entfernt werden kann.

### Liste der Bezugszeichen

| | | | |
|---|---|---|---|
| 100 | Transportband | 212 | unterer Klemmblock |
| 101 | Ende | 213 | Klinge |
| 102 | Schweißnaht | 214 | Seitenfläche |
| 103 | Verjüngung | 215 | Schneidkante |
| 110 | Oberseite | 220 | Führungsvorrichtung |
| 120 | Unterseite | 230 | Ausrichthilfe |
| 200 | Anlage | 240 | Heizvorrichtung |
| 210 | Klemmvorrichtung | 250 | Antriebsvorrichtung |
| 211 | oberer Klemmblock | | |

## Patentansprüche

1. Anlage (200) zum Verschweißen von zwei Enden (101) eines Transportbandes (100) miteinander,
a. wobei die Anlage zwei Klemmvorrichtungen (210) mit jeweils zwei Klemmblöcken (211, 212) zum Einklemmen jeweils eines der Enden (101) des Transportbandes (100) zwischen den beiden Klemmblöcken (211) umfasst,
b. wobei von den beiden Klemmblöcken (211, 212) der Klemmvorrichtungen (210) jeweils ein oberer Klemmblock (211) zum Anlegen an eine flächige Oberseite (110) des Transportbandes (100) und ein unterer Klemmblock (212) zum Anlegen an eine zu der Oberseite (110) parallele, flächige Unterseite (120) des Transportbandes (100) eingerichtet ist,
c. wobei die Anlage (200) eine Führungsvorrichtung (220) umfasst, die die Klemmvorrichtungen (210) parallel zur Oberseite (110) des Transportbandes (100) aufeinander zu verschieblich führt,
**dadurch gekennzeichnet, dass**
d. an jedem der Klemmblöcke (211, 212) jeder der Klemmvorrichtungen (210) jeweils mindestens eine Klinge (213) mit einer Seitenfläche (214) zum Anlegen an die Oberseite (110) oder an die Unterseite (120) des Transportbandes (100) angeordnet ist,
e. wobei jede der Klingen (213) eine zu der Oberseite (110) parallele Schneidkante (215) aufweist, die auf die jeweils andere Klemmvorrichtung (210) zu über den Klemmblock (211, 212) übersteht.

2. Anlage (200) nach Anspruch 1,
wobei die Anlage (200) eine zwischen die beiden Klemmvorrichtungen (210) einbringbare Ausrichthilfe (230) zur Ausrichtung der beiden Enden (101) zueinander, bevorzugt zur Ausrichtung von in der Oberseite (110) und/oder in der Unterseite (120) des Transportbandes (100) angeordneten Nuten zueinander, umfasst.

3. Anlage (200) nach einem der Ansprüche 1 bis 2,
wobei die Anlage (200) eine zwischen die beiden Klemmvorrichtungen (210) einbringbare Heizvorrichtung (240) zum Anschmelzen zumindest eines der beiden Enden (101) umfasst.

4. Anlage (200) nach einem der Ansprüche 1 bis 3,
wobei das Transportband (100) dazu ausgelegt ist, Güter entlang einer zu der Oberseite (110) des Transportbandes (100) parallelen Transportrichtung zu transportieren, wobei die beiden Klemmvorrichtungen (210) dazu ausgelegt sind, die Enden (101) so einzuklemmen, dass die Transportrichtung des Transportbandes (100) schräg zu der Schneidkante (215) der mindestens einen Klinge (213) der Klemmblöcke (211, 212) ausgerichtet ist.

5. Anlage (200) nach einem der Ansprüche 1 bis 4,
wobei zumindest einer der Klemmblöcke (211, 212) eine Mehrzahl von Aufnahmeöffnungen zur Aufnahme jeweils eines Endes (101) eines Transportbandes (100) zum Verschweißen des Endes (101) aufweist.

6. Anlage (200) nach einem der Ansprüche 1 bis 5,
wobei die Führungsvorrichtung (220) ein Schienensystem umfasst, auf dem die Klemmvorrichtungen (210) verschieblich geführt sind.

7. Anlage (200) nach einem der Ansprüche 1 bis 6,
wobei die Anlage (200) eine Antriebsvorrichtung (250) zum Antrieb einer Verschiebung der Klemmvorrichtungen (210) entlang der Führungsvorrichtung (220) umfasst.

8. Verfahren zum Verschweißen von zwei Enden (101) eines Transportbandes (100) miteinander mit einer Anlage (200) gemäß einem der Ansprüche 1 bis 7, das Verfahren umfassend folgende Schritte:
a. Auflegen einer flächigen Unterseite (120) des Transportbandes (100) an die unteren Klemmblöcke (212) der Klemmvorrichtungen (210) der Anlage (200), sodass die Enden (101) des Transportbandes (100) einander gegenüberliegen,
b. Anlegen der oberen Klemmblöcke (211) der Klemmvorrichtungen (210) an eine zu der Unterseite (120) parallele, flächige Oberseite (110) des Transportbandes (100),
c. Einklemmen der Enden (101) des Transportbandes (100) zwischen den Klemmblöcken (211, 212),
d. Anschmelzen zumindest eines der Enden (101) des Transportbandes (100),
e. Zusammenschieben der beiden Klemmvorrichtungen (210) entlang der Führungsvorrichtung (220) der Anlage (200), sodass die Enden (101) des Transportbandes (100) zusammengepresst werden, wobei eine über die Oberseite (110) und/oder über die Unterseite (120) des Transportbandes (100) überstehende Schweißnaht (102) entsteht, und
f. Erzeugen einer Materialverjüngung (103) mit den Schneidkanten (215) der Klingen (213) der Klemmblöcke (211, 212) in der Schweißnaht (102) in einer Ebene mit der Oberseite (110) und/oder der Unterseite (120) bei dem Zusammenschieben.

9. Verfahren nach Anspruch 8,
umfassend folgenden Schritt nach dem Erzeugen der Materialverjüngung (103):
Durchtrennen, bevorzugt Durchreißen und/oder Durchschneiden, der Materialverjüngung (103).

10. Verfahren nach Anspruch 8 oder 9,
umfassend folgende Schritte vor dem Einklemmen der Enden (101) des Transportbandes (100) zwischen den Klemmblöcken (211, 212):
a. Einbringen einer Ausrichthilfe (230) zwischen die beiden Klemmvorrichtungen (210) und
b. Ausrichten der beiden Enden (101) des Transportbandes (100), bevorzugt in der Oberseite (110) und/oder in der Unterseite (120) des Transportbandes (100) angeordneter Nuten, mit der Ausrichthilfe (230) zueinander.

11. Verfahren nach einem der Ansprüche 8 bis 10,
umfassend folgenden Schritt nach dem Einklemmen der Enden (101) des Transportbandes (100) zwischen den Klemmblöcken (211, 212):
a. Einbringen einer Heizvorrichtung (240) zwischen die beiden Klemmvorrichtungen (210),
b. wobei das Anschmelzen zumindest eines der Enden (101) des Transportbandes (100) mit der Heizvorrichtung (240) erfolgt.

12. Verfahren nach einem der Ansprüche 8 bis 11,
umfassend folgende Schritte nach dem Erzeugen der Materialverjüngung (103) und bevorzugt nach einem Durchtrennen der Materialverjüngung (103): Entfernen der Schweißnaht (102) aus in der Oberseite (110) und/oder in der Unterseite (120) des Transportbandes (100) angeordneten Nuten.

## Claims

1. An apparatus (200) for welding two ends (101) of a conveyor belt (100) to one another,
a. wherein the apparatus (200) comprises two clamping devices (210), each having two clamping blocks (211, 212) for clamping one of the ends (101) of the conveyor belt (100) between the two clamping blocks (211),
b. wherein of the two clamping blocks (211, 212) of the clamping devices (210), an upper clamping block (211) is arranged for engaging with a flat upper side (110) of the conveyor belt (100), and a lower clamping block (212) is arranged for engaging with a flat lower side (120) of the conveyor belt (100) the lower side (120) being parallel to the upper side (110),
c. wherein the apparatus (200) comprises a guide device (220) which guides the clamping devices (210) so that they can be moved towards each other in parallel to the upper side (110) of the conveyor belt (100),
**characterised in that**
d. at least one blade (213) is arranged on each of the clamping blocks (211, 212) of each of the clamping devices (210), the blade (213) having a side surface (214) for engaging with the upper side (110) or with the lower side (120) of the conveyor belt (100),
e. each of the blades (213) having a cutting edge (215) parallel to the upper side (110), which protrudes beyond the clamping block (211, 212) towards the other clamping device (210).

2. The apparatus (200) according to claim 1,
wherein the apparatus (200) comprises an alignment aid (230) that can be inserted between the two clamping devices (210) for aligning the two ends (101) with each other, preferably for aligning grooves arranged in the upper side (110) and/or in the lower side (120) of the conveyor belt (100).

3. The apparatus (200) according to one of claims 1 to 2,
wherein the apparatus (200) comprises a heating device (240) that can be inserted between the two clamping devices (210) for melting at least one of the two ends (101).

4. The apparatus (200) according to one of claims 1 to 3,
wherein the conveyor belt (100) is designed to transport goods along a transport direction parallel to the upper side (110) of the conveyor belt (100), wherein the two clamping devices (210) are designed to clamp the ends (101) in such a way that the transport direction of the conveyor belt (100) is aligned obliquely to the cutting edge (215) of the at least one blade (213) of the clamping blocks (211, 212).

5. The apparatus (200) according to one of claims 1 to 4,
wherein at least one of the clamping blocks (211, 212) comprises a plurality of receiving openings each for receiving one end (101) of a conveyor belt (100) for welding the end (101).

6. The apparatus (200) according to one of claims 1 to 5,
wherein the guide device (220) comprises a rail system on which the clamping devices (210) are guided in a displaceable manner.

7. The apparatus (200) according to one of claims 1 to 6,
wherein the apparatus (200) comprises a drive device (250) for driving a displacement of the clamping devices (210) along the guide device (220) .

8. A method for welding two ends (101) of a conveyor belt (100) to one another using an apparatus (200) according to one of claims 1 to 7,
the method comprising the following steps:
a. placing a flat lower side (120) of the conveyor belt (100) against the lower clamping blocks (212) of the clamping devices (210) of the apparatus (200) so that the ends (101) of the conveyor belt (100) face each other,
b. applying the upper clamping blocks (211) of the clamping devices (210) to a flat upper side (110) of the conveyor belt (100) the upper side (110) being parallel to the lower side (120),
c. clamping the ends (101) of the conveyor belt (100) between the clamping blocks (211, 212),
d. melting at least one of the ends (101) of the conveyor belt (100),
e. pushing the two clamping devices (210) together along the guide device (220) of the apparatus (200) so that the ends (101) of the conveyor belt (100) are pressed together, creating a weld seam (102) that protrudes above the top side (110) and/or above the bottom side (120) of the conveyor belt (100), and
f. creating a material taper (103) using the cutting edges (215) of the blades (213) of the clamping blocks (211, 212) in the weld seam (102) during the step of pushing the two clamping devices (210) together, the material taper (103) lying in a plane with the upper side (110) and/or the lower side (120).

9. The method according to claim 8,
comprising the following step after the step of creating the material taper (103):
severing, preferably tearing and/or cutting through, the material taper (103).

10. The method according to claim 8 or 9,
comprising the following steps before the step of clamping the ends (101) of the conveyor belt (100) between the clamping blocks (211, 212):
a. inserting an alignment aid (230) between the two clamping devices (210) and
b. aligning the two ends (101) of the conveyor belt (100), preferably aligning grooves arranged in the upper side (110) and/or in the lower side (120) of the conveyor belt (100), with each other using the alignment aid (230).

11. The method according to one of claims 8 to 10,
comprising the following step after the step of clamping the ends (101) of the conveyor belt (100) between the clamping blocks (211, 212):
a. inserting a heating device (240) between the two clamping devices (210),
b. wherein the step of melting at least one of the ends (101) of the conveyor belt (100) is performed using the heating device (240).

12. The method according to one of claims 8 to 11,
comprising the following steps after the step of creating the material taper (103) and preferably after the step of severing the material taper (103):
removing the weld seam (102) from grooves arranged in the upper side (110) and/or in the lower side (120) of the conveyor belt (100).

## Revendications

1. Installation (200) pour souder entre elles deux extrémités (101) d'une bande transporteuse (100),
a. l'installation (200) comprenant deux dispositifs de serrage (210) chacun avec deux blocs de serrage (211, 212) pour serrer une des extrémités (101) de la bande transporteuse (100) entre les deux blocs de serrage (211),
b. les deux blocs de serrage (211, 212) des dispositifs de serrage (210) comprenant chacun un bloc de serrage supérieur (211) étant conçu pour s'appliquer contre une face supérieure (110) plane de la bande transporteuse (100) et un bloc de serrage inférieur (212) étant conçu pour s'appliquer contre une face inférieure (120) plane de la bande transporteuse (100), la face inférieure (120) plane parallèle à la face supérieure (110),
c. l'installation (200) comprenant un dispositif de guidage (220) qui guide les dispositifs de serrage (210) de manière à ce qu'ils puissent se déplacer l'un vers l'autre parallèlement à la face supérieure (110) de la bande transporteuse (100),
**caractérisé en ce que**
d. sur chacun des blocs de serrage (211, 212) de chacun des dispositifs de serrage (210) est disposée au moins une lame (213) ayant une surface latérale (214) destinée à être appliquée contre la face supérieure (110) ou contre la face inférieure (120) de la bande transporteuse (100),
e. chacune des lames (213) présentant un tranchant (215) parallèle à la face supérieure (110), qui dépasse du bloc de serrage (211, 212) vers l'autre dispositif de serrage (210).

2. Installation (200) selon la revendication 1,
l'installation (200) comprenant un dispositif d'aide à l'alignement (230) pouvant être inséré entre les deux dispositifs de serrage (210) pour aligner les deux extrémités (101) l'une par rapport à l'autre, de préférence pour aligner des rainures disposées dans la face supérieure (110) et/ou dans la face inférieure (120) de la bande transporteuse (100) les unes par rapport aux autres.

3. Installation (200) selon l'une des revendications 1 à 2,
l'installation (200) comprenant un dispositif de chauffage (240) pouvant être inséré entre les deux dispositifs de serrage (210) pour faire fondre au moins l'une des deux extrémités (101).

4. Installation (200) selon l'une des revendications 1 à 3,
la bande transporteuse (100) étant conçue pour transporter des marchandises le long d'une direction de transport parallèle à la face supérieure (110) de la bande transporteuse (100), les deux dispositifs de serrage (210) étant conçus pour serrer les extrémités (101) de telle sorte que la direction de transport de la bande transporteuse (100) soit orientée obliquement par rapport au tranchant (215) de ladite au moins une lame (213) des blocs de serrage (211, 212).

5. Installation (200) selon l'une des revendications 1 à 4,
au moins l'un des blocs de serrage (211, 212) comportant une pluralité d'ouvertures de réception destinées à recevoir chacune une extrémité (101) d'une bande transporteuse (100) afin de souder l'extrémité (101).

6. Installation (200) selon l'une des revendications 1 à 5,
le dispositif de guidage (220) comprenant un système de rails sur lequel les dispositifs de serrage (210) sont guidés de manière coulissante.

7. Installation (200) selon l'une des revendications 1 à 6,
l'installation (200) comprenant un dispositif d'entraînement (250) pour entraîner un déplacement des dispositifs de serrage (210) le long du dispositif de guidage (220).

8. Procédé pour souder entre elles deux extrémités (101) d'une bande transporteuse (100) à l'aide d'une installation (200) selon l'une des revendications 1 à 7,
le procédé comprenant les étapes suivantes :
a. poser une face inférieure (120) plane de la bande transporteuse (100) sur les blocs de serrage inférieurs (212) des dispositifs de serrage (210) de l'installation (200) de manière à ce que les extrémités (101) de la bande transporteuse (100) se trouvent face à face,
b. appliquer les blocs de serrage supérieurs (211) des dispositifs de serrage (210) sur une face supérieure (110) plane de la bande transporteuse (100), la face supérieure (110) étant parallèle à la face inférieure (120),
c. serrer les extrémités (101) de la bande transporteuse (100) entre les blocs de serrage (211, 212),
d. faire fondre au moins l'une des extrémités (101) de la bande transporteuse (100),
e. rapprocher les deux dispositifs de serrage (210) le long du dispositif de guidage (220) de l'installation (200) de manière à comprimer les extrémités (101) de la bande transporteuse (100), ce qui crée un cordon de soudure (102) dépassant de la face supérieure (110) et/ou de la face inférieure (120) de la bande transporteuse (100), et
f. créer un rétrécissement de matière (103) en utilisant les tranchants (215) des lames (213) des blocs de serrage (211, 212) dans le cordon de soudure (102) lors de l'étape de rapprocher les deux dispositifs de serrage (210), le rétrécissement de matière (103) se trouvant dans un plan avec la face supérieure (110) et/ou avec la face inférieure (120).

9. Procédé selon la revendication 8,
comprenant l'étape suivante après l'étape de créer le rétrécissement de matière (103) :
sectionner, de préférence déchirer et/ou découper, le rétrécissement de matière (103).

10. Procédé selon la revendication 8 ou 9,
comprenant les étapes suivantes avant l'étape de serrer les extrémités (101) de la bande transporteuse (100) entre les blocs de serrage (211, 212) :
a. insérer un dispositif d'alignement (230) entre les deux dispositifs de serrage (210) et
b. aligner les deux extrémités (101) de la bande transporteuse (100) l'une à l'autre, de préférence aligner des rainures disposées dans la face supérieure (110) et/ou dans la face inférieure (120) de la bande transporteuse (100) les unes aux autres, à l'aide du dispositif d'alignement (230).

11. Procédé selon l'une des revendications 8 à 10,
comprenant l'étape suivante après l'étape de serrer les extrémités (101) de la bande transporteuse (100) entre les blocs de serrage (211, 212) :
a. insérer un dispositif de chauffage (240) entre les deux dispositifs de serrage (210),
b. l'étape de faire fondre au moins l'une des extrémités (101) de la bande transporteuse (100) étant effectuée à l'aide du dispositif de chauffage (240).

12. Procédé selon l'une des revendications 8 à 11,
comprenant les étapes suivantes après l'étape de créer le rétrécissement de matière (103) et de préférence après l'étape de sectionner le rétrécissement de matière (103) :
enlever le cordon de soudure (102) de rainures disposées dans la face supérieure (110) et/ou dans la face inférieure (120) de la bande transporteuse (100).
